# EUROPÄISCHE PATENTSCHRIFT

(11) **EP 1 884 683 B1**
(45) Veröffentlichungstag und Bekanntmachung des Hinweises auf die Patenterteilung: **05.09.2012**
(21) Anmeldenummer: 07012971.3
(22) Anmeldetag: 03.07.2007
(51) Int. Cl.: F16H 7/08

(54) **Zugmittelanordnung**
Traction device assembly
Agencement d'élément de traction

(30) Priorität: 05.08.2006 DE 102006036735
(43) Veröffentlichungstag der Anmeldung: 06.02.2008
(73) Patentinhaber: Bayerische Motoren Werke Aktiengesellschaft, 80809 München (DE)
(72) Erfinder: Semet, Wolfgang, 85276 Pfaffenhofen (DE)

(56) Entgegenhaltungen:
- WO-A1-2006/037428
- US-A- 4 850 934
- US-A1- 2003 220 164
- US-B1- 6 322 469
- US-B1- 6 358 169

## Beschreibung

Die Erfindung betrifft eine Zugmittelanordnung umfassend ein Antriebsrad, wenigstens ein Abtriebsrad, ein Zugmittel sowie eine einem ziehenden freien Abschnitt des Zugmittels (Lasttrum) zugeordnete erste Führungseinrichtung mit Spanneinrichtung.

Der Antrieb von Nockenwellen von Brennkraftmaschinen erfolgt üblicherweise ausgehend von der Kurbelwelle mittels einer Steuerkette oder eines Steuerriemens, wobei zur Unterbindung von Querschwingungen Ketten- oder Riemenspanner eingesetzt werden. Eine derartige Anordnung mit einem Kettenspanner, welcher einen mittels einer Blattfeder mechanisch kraftbeaufschlagten Schuh umfasst, ist in der DE 41 14 948 A1 beschrieben.

Bei einer wie in der DE 41 14 948 A1 beschriebenen Anordnung tritt insbesondere bei einer Spannungserhöhung im dem Spanner zugeordneten freien Abschnitt des Zugmittels im anderen freien Abschnitt des Zugmittels zumindest kurzzeitig ein Spiel auf, so dass unerwünschte Querschwingungen im Zugmittel angeregt werden. Dabei kann sich das Zugmittels vom Spanner abheben mit der Folge störender Geräusche und übermäßigen Verschleißes bis hin zum Bruch des Zugmittels. Abhilfe könnte eine wie in der DE 201 02 748 U1 gezeigte Anordnung schaffen, gemäß der zwei Spanneinrichtungen vorgesehen sind, sodass sowohl die Last- als auch die Leertrum spannkraftbeaufschlagbar sind. Jedoch ist es sowohl technisch als auch wirtschaftlich aufwändig, mehrere Spanneinrichtungen vorzusehen.

Aus der US 6,322,469 B1 ist eine Kettenspannungseinrichtung bekannt, die zwei Spannerarme aufweist, auf denen Gleitflächen vorgesehen sind, die mit zwei separaten Abschnitten einer Kette eines Steuertriebes in Kontakt gebracht werden können.

Aus der gattungsbildenden US 4,850,934 A ist eine frei bewegliche Spannungseinrichtung bekannt, die Dämpfungseigenschaften sowie gyroscopische Stabilisierungseigenschaften aufweist, zur Verwendung in einem Antriebssystem, das ein flexibles Zugmittel aufweist.

Der Erfindung liegt daher die Aufgabe zugrunde, eine eingangs genannte Zugmittelanordnung bereitzustellen, welche auf einfache und günstige Weise eine Spannkraftbeaufschlagung des Zugmittels ermöglicht und gleichzeitig unerwünschte Querschwingungen wirksam unterbindet.

Die Lösung der Aufgabe erfolgt mit einer Zugmittelanordnung mit den Merkmalen des Anspruchs 1, wobei gemäß der zugrunde liegenden Idee einem gezogenen freien Abschnitt des Zugmittels (Leertrum) eine zweite Führungseinrichtung zugeordnet ist und erste und zweite Führungseinrichtung unmittelbar starr miteinander verbunden sind. Bei dieser Anordnung belasten sowohl positive als auch negative Lastmomente am Zugmittel die Spanneinrichtung in gleicher Richtung und die Spanneinrichtung kann durch geeignete Abstimmung dafür optimiert werden, außerdem kann die Anordnung sehr einfach und günstig hergestellt werden.

Die erste Führungseinrichtung ist bogenförmig und die zweite Führungseinrichtung der ersten Führungseinrichtung angepasst bogenförmig ausgestaltet. Die beiden Führungseinrichtungen weisen eine gleichgerichtete Bogenform auf, dadurch es wird eine nur geringe Anzahl an Bauteilen benötigt und zugleich sind die beiden Führungseinrichtungen ohne Zwischenschaltung weiterer Bauteile sicher miteinander verbunden.

Dabei weist die zweite Führungseinrichtung in ihrem der ersten Führungseinrichtung zugewandten Verbindungsbereich einen U-förmigen Querschnitt auf, wobei Schenkel den Laufflächenbereich der ersten Führungseinrichtung umgreifen, sodass ein kanalförmiger Hohlraum zur Führung des Zugmittels gebildet ist. Dadurch wir einerseits eine gute Verbindung der Führungseinrichtungen miteinander und zugleich eine sichere Führung des Zugmittels erreicht.

Gemäß einem bevorzugten Ausführungsbeispiel ist die erste Führungseinrichtung mit der zweiten Führungseinrichtung lösbar verbunden. Dadurch ist es möglich, die Spannschienen insbesondere zur Montage des Zugmittels zu trennen. Vorzugsweise sind die beiden Führungseinrichtungen miteinander verschraubt, jedoch kann es auch sehr zweckmäßig sein, zur Verbindung eine Schnappverbindung oder Stifte vorzusehen.

Vorteilhaft ist es, wenn bei der erfindungsgemäßen Zugmittelanordnung ein Umlenkrad verwendet wird. Dadurch kann der erforderliche Bauraum reduziert werden.

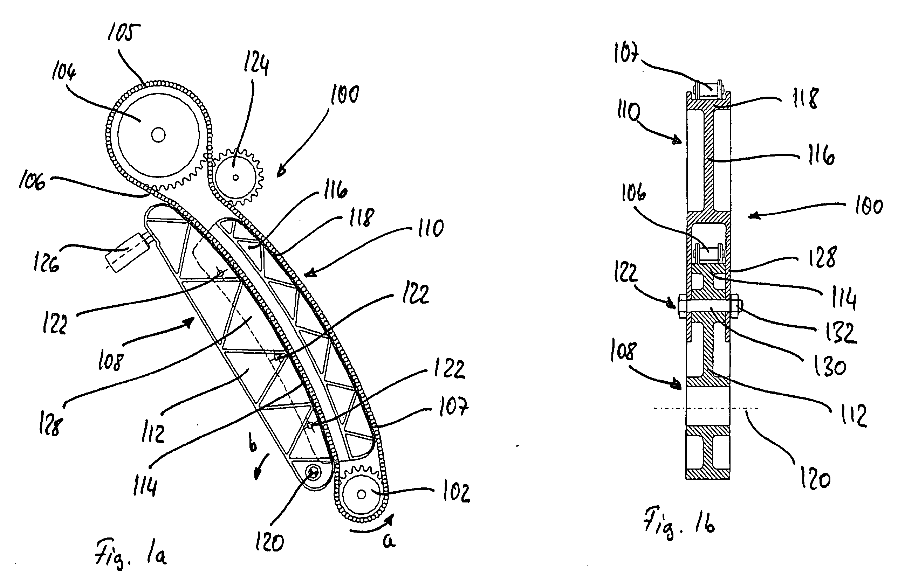

Nachfolgend ist ein besonders zu bevorzugendes Ausführungsbeispiel der Erfindung unter Bezugnahme auf Figuren näher erläutert, dabei zeigen schematisch und beispielhaft
- Figur 1a: eine Zugmittelanordnung mit zwei starr miteinander verbundenen Führungsschienen und
- Figur 1b: eine Schnittansicht einer Zugmittelanordnung mit zwei starr miteinander verbundenen Führungsschienen.

Figur 1a zeigt eine Zugmittelanordnung 100 mit einer einem ziehenden freien Abschnitt (Lasttrum) 106 des Zugmittels 105 zugeordneten ersten Spannschiene 108 und einer einem gezogenen freien Abschnitt (Leertrum) 107 des Zugmittels 105 zugeordneten zweiten Spannschiene 110, die starr miteinander verbunden sind, eine Schnittansicht der Zugmittelanordnung 100 ist in Figur 1b dargestellt.

Gemäß der in den Figuren dargestellten Zugmittelanordnung 100 erfolgt ausgehend von einer Kurbelwelle 102 einer hier nicht näher gezeigten Brennkraftmaschine der Antrieb einer Nockenwelle 104. Die Nockenwellen dienen dabei zur Steuerung von Einlass- oder Auslassventilen der Brennkraftmaschine. Zur Kraft-/Bewegungsübertragung ist vorliegend eine Steuerkette 105 vorgesehen, wobei anstelle einer Kette auch ein Riemen vorgesehen sein kann. Einem anderen erfindungsgemäßen Ausführungsbeispiel zufolge dient die Zugmittelanordnung zum Antrieb von Nebenaggregaten eines Kraftfahrzeugs, wie Generator, Pumpe oder Kompressor.

Wie in den Figuren durch entsprechende Durchmesser der der Kurbelwelle 102 bzw. der Nockenwelle 104 zugeordneten Zahnräder angedeutet, dreht die Nockenwelle 104 gegenüber der Kurbelwelle 102 mit halber Drehzahl, wobei sich bei der Brennkraftmaschine ein Ladungswechsel- und ein Kompressionstakt ergibt.

Bei einer Drehrichtung der Kurbelwelle 102 entsprechend der Pfeilrichtung a ist der freien Abschnitt 106 des Zugmittels 105 ziehend (Lasttrum) und der freien Abschnitt 107 des Zugmittels 105 gezogen (Leertrum).

Die erfindungsgemäße Einrichtung 100 eignet sich in besonderem Maße zur Verwendung bei Antrieben, welche ein hohes Wechselmoment aufweisen. ihre Verwendung bietet daher nicht nur bei Nockenwellenantrieben, sondern beispielsweise auch in Verbindung mit einem Startergenerator, insbesondere bei Hybridfahrzeugen, welche sowohl mittels einer Brennkraftmaschine als auch elektromotorisch antreibbar sind, große Vorteile.

Dem Zugmittelabschnitt 106 ist eine schienenartig ausgebildete erste Führungseinrichtung 108 zugeordnet, eine zweite Führungseinrichtung 110 ist dem Zugmittelabschnitt 107 zugeordnet. Die Führungsschienen 108, 110 umfassen jeweils einen Tragbereich 112, 116 und einen Laufflächenbereich 114, 118. Tragbereich 112, 116 und Laufflächenbereich 114, 118 sind einstückig oder als gesonderte, miteinander verbundene Bauteile hergestellt, wobei insbesondere der Laufflächenbereich 114, 118 aus einem öl- und wärmebeständigen, abriebsfesten Material mit guten Gleiteigenschaften besteht. Gegebenenfalls kann im Tragbereich 112, 116 ein anderes, günstigeres Material verwendet werden. Die Führungsschienen 108, 110 des vorliegenden Ausführungsbeispiels bestehen aus einem thermoplastischen Kunststoff mit Glasfaserfüllung, wobei der Tragbereich 112, 116 in Material sparender Weise spritzgussfertigungsgerecht rippenverstärkt ausgeführt ist.

Die Führungsschiene 108 ist brennkraftmaschinengehäuseseitig um eine Achse 120 verschwenkbar festgelegt, wobei zur Verbindung am Brennkraftmaschinengehäuse einsitzende Stifte vorgesehen sind, auf welchen die Führungsschiene 108 drehbeweglich aufgesteckt ist, so dass das freie Ende der Führungsschiene 108 verschwenkbar ist.

Mit ihrem bogenförmigen Laufflächenbereich 114 liegt die Führungsschiene 108 außenseitig im Bereich 106 am Zugmittel 105 an und ist gegen das Zugmittel 105 mittels einer sich am Brennkraftmaschinengehäuse abstützenden Spanneinrichtung 126 spannbar.

Die Spanneinrichtung 126 umfasst eine Kolben-Zylinder-Anordnung, welche geregelt oder ungeregelt hydraulisch beaufschlagbar ist. Alternativ kann die Spanneinrichtung auch pneumatisch, mechanisch, elektromagnetisch oder elektromotorisch beaufschlagbar sein. Vorteilhaft ist es, wenn die Spanneinrichtung 126 auch eine Dämpfungseinrichtung zur Dämpfung von Schwingungen umfasst.

Die zweite Führungsschiene 110 ist der ersten Führungsschiene 108 angepasst bogenförmig ausgestaltet und mit dieser starr verbunden. Hierzu weist die zweite Führungsschiene 110 in ihrem Verbindungsbereich einen U-förmigen Querschnitt auf, wobei die Schenkel 128 den Laufflächenbereich 114 der Führungsschiene 108 umgreifen derart, dass ein kanalförmiger Hohlraum gebildet ist, in welchem das Zugmittel 105 geführt ist.

Die Schenkel 128 der zweiten Führungsschiene 110 weisen mit Löchern im Tragbereich 112 der ersten Führungsschiene 108 korrespondierende Löcher zur Verbindung unter Verwendung von Befestigungselementen 122 auf. Im dargestellten Ausführungsbeispiel erfolgt eine Verbindung mittels Schrauben 130 und Muttern 132. Alternativ oder zusätzlich kann auch eine Verbindung mittels Schnappverbindung erfolgen, indem beispielsweise die Schenkel 128 der zweiten Führungsschiene 110 randseitig mit einem sich in Führungsschienenlängsrichtung erstreckenden Vorsprung versehen sind, welcher in eine entsprechende Ausnehmung im Tragbereich 112 der ersten Führungsschiene 108 eingreift. Die Lösbarkeit der Verbindung ergibt sich durch die Flexibilität des Führungsschienenwerkstoffs im Bereich der Schenkel 128.

Sowohl eine Erhöhung der Spannung im Abschnitt 106 als auch im Abschnitt 107 des Zugmittels 105 bedingt ein Verschwenken der Führungsschienen 108, 110 in Pfeilrichtung b gegen die Spanneinrichtung 126. Bewegungen des Zugmittels werden so in jedem Fall gefedert und gedämpft kompensiert. Auf diese Weise werden am Steuertrieb Schwingungen wirksam vermieden, was letztlich dazu führt, dass die Belastung reduziert und der gesamte Steuertrieb entsprechend leichter dimensioniert werden kann. Es werden exaktere Ventilsteuerzeiten erreicht, auch die Nebenaggregate sind einer geringeren Belastung ausgesetzt, die Laufruhe wird erhöht.

## Patentansprüche

1. Zugmittelanordnung (100) umfassend ein Antriebsrad (102), wenigstens ein Abtriebsrad (104), ein Zugmittel (105) sowie eine einem ziehenden freien Abschnitt des Zugmittels (106) zugeordnete erste Führungseinrichtung (108) mit Spanneinrichtung (126), wobei
- einem gezogenen freien Abschnitt des Zugmittels (107) eine zweite Führungseinrichtung (110) zugeordnet ist und
- erste und zweite Führungseinrichtung (108, 110) unmittelbar starr miteinander verbunden sind,
wobei
- die erste Führungseinrichtung (108) bogenförmig und die zweite Führungseinrichtung (110) der ersten Führungseinrichtung (108) angepasst bogenförmig ausgestaltet sind,
**dadurch gekennzeichnet, dass**
- die beiden Führungseinrichtungen eine gleichgerichtete Bogenform aufweisen,
- die zweite Führungseinrichtung (110) in ihrem der ersten Führungseinrichtung (108) zugewandten Verbindungsbereich einen U-förmigen Querschnitt aufweist, wobei
- Schenkel (128) den Laufflächenbereich (114) der ersten Führungseinrichtung (108) umgreifen, sodass
- ein kanalförmiger Hohlraum zur Führung des Zugmittels (105) gebildet ist.

2. Zugmittelanordnung (100) nach einem der vorhergehenden Ansprüche, **dadurch gekennzeichnet, dass** die erste Führungseinrichtung (108) mit der zweiten Führungseinrichtung (110) lösbar verbunden ist.

3. Zugmittelanordnung (100) nach einem der vorhergehenden Ansprüche, **dadurch gekennzeichnet, dass** die erste Führungseinrichtung (108) mit der zweiten Führungseinrichtung (110) verschraubt ist.

4. Zugmittelanordnung (100) nach einem der vorhergehenden Ansprüche, **dadurch gekennzeichnet, dass** die erste Führungseinrichtung (108) mit der zweiten Führungseinrichtung (110) mittels einer Schnappverbindung verbunden ist.

5. Zugmittelanordnung (100) nach einem der vorhergehenden Ansprüche, **dadurch gekennzeichnet, dass** die erste Führungseinrichtung (108) mit der zweiten Führungseinrichtung (110) mittels Stiften verbunden ist.

6. Zugmittelanordnung (100) nach einem der vorhergehenden Ansprüche, **gekennzeichnet durch** ein Umlenkrad (124).

## Claims

1. A tension-means arrangement (100) comprising a drive wheel (102), at least one driven wheel (104), a tension means (105) and a first guide device (108) and clamping means (126) associated with a free pulling portion (106) of the tension means, wherein
- a pulled free portion (107) of the tension means is associated with a second guide device (110) and
- the first and the second guide devices (108, 110) are rigidly connected to one another directly, wherein
- the first guide device (108) is arcuate and the second guide device (110) is arcuate and adapted to the first guide device (108),
**characterised in that**
- the two guide devices have a unidirectional arcuate shape, and
- the second guide device (110) has a U-shaped cross-section in its connecting means facing the first guide device (108), wherein
- limbs (128) surround the running-surface region (114) of the first guide device (108), so that
- a channel-like cavity is formed for guiding the tension means (105).

2. A tension-means arrangement (100) according to any of the preceding claims, **characterised in that** the first guide device (108) is releasably connected to the second guide device (110).

3. A tension-means arrangement (100) according to any of the preceding claims, **characterised in that** the first guide device (108) is screwed to the second guide device (110).

4. A tension-means arrangement (100) according to any of the preceding claims, **characterised in that** the first guide device (108) is connected to the second guide device (110) by a snap connection.

5. A tension-means arrangement (100) according to any of the preceding claims, **characterised in that** the first guide device (108) is connected to the second guide device (110) by pins.

6. A tension-means arrangement (100) according to any of the preceding claims, **characterised by** a guide wheel (124).

## Revendications

1. Dispositif d'entraînement par traction (100) comprenant :
- une roue d'entraînement (102), au moins une roue entraînée (104), un organe de traction (105) ainsi qu'une première installation de guidage (108) avec tendeur (126) tirant sur un segment libre associé au moyen de traction de l'organe de traction (106),
dans lequel
- une seconde installation de guidage (110) est associée à un segment libre de l'organe de traction (107), et
- la première et la seconde installation de guidage (108, 110) sont reliées directement et de manière rigide entre-elles,
dans lequel
- la première installation de guidage (108) est réalisée en forme d'arc et la seconde installation de guidage (110) est réalisée en forme d'arc adapté à l'arc de la première installation de guidage (108), **caractérisé en ce que**
- les deux installations de guidage ont une forme d'arc de même orientation,
- la seconde installation de guidage (110) a une section en U dans sa zone de fixation associée à la première installation de guidage (108),
- la branche (128) entourant la zone de surface de glissement (114) de la première installation de guidage (108) de sorte à former un espace creux en forme de canal pour le guidage du moyen de traction (105).

2. Dispositif d'entraînement par traction (100) selon la revendication 1,
**caractérisé en ce que**
la première installation de guidage (108) est reliée de manière amovible avec la seconde installation de guidage (110).

3. Dispositif d'entraînement par traction (100) selon l'une des revendications précédentes,
**caractérisé en ce que**
la première installation de guidage (108) est vissée à la seconde installation de guidage (110).

4. Dispositif d'entraînement par traction (100) selon l'une des revendications précédentes,
**caractérisé en ce que**
la première installation de guidage (108) est reliée à la seconde installation de guidage (110) au moyen d'une liaison par enclipage.

5. Dispositif d'entraînement par traction (100) selon l'une des revendications précédentes,
**caractérisé en ce que**
la première installation de guidage (108) est reliée à la seconde installation de guidage (110) au moyen de goujons.

6. Dispositif d'entraînement par traction (100) selon l'une des revendications précédentes,
**caractérisé par**
une roue de déviation (124).
